# EUROPÄISCHE PATENTSCHRIFT

(11) **EP 3 319 832 B1**
(45) Veröffentlichungstag und Bekanntmachung des Hinweises auf die Patenterteilung: **10.07.2019**
(21) Anmeldenummer: 16723701.5
(22) Anmeldetag: 10.05.2016
(51) Int. Cl.: B60K 15/07, B60K 16/00, B60K 15/03, B60K 15/063

(54) **FAHRZEUG, AUFWEISEND EIN SOLARPANEL ZUR ERZEUGUNG VON ELEKTRISCHER ENERGIE**
VEHICLE COMPRISING A SOLAR PANEL FOR GENERATING ELECTRIC ENERGY
VÉHICULE COMPRENANT UN PANNEAU SOLAIRE POUR LA GÉNÉRATION D'ÉNERGIE ÉLECTRIQUE

(30) Priorität: 10.07.2015 DE 102015212992
(43) Veröffentlichungstag der Anmeldung: 16.05.2018
(73) Patentinhaber: Robert Bosch GmbH, 70442 Stuttgart (DE)
(72) Erfinder: HERZENJAK, Florian, 70469 Stuttgart (DE)
(86) Internationale Anmeldenummer: PCT/EP2016/060470
(87) Internationale Veröffentlichungsnummer: WO 2017/008934

(56) Entgegenhaltungen:
- DE-A1- 19 949 001
- DE-A1-102012 013 015

## Beschreibung

Die Erfindung betrifft ein Fahrzeug nach dem Oberbegriff des Anspruchs 1.

### Stand der Technik

Ein derartiges Fahrzeug ist aus der DE 199 49 001 A1 bekannt.

Ein weiteres Fahrzeug mit Solarpanel ist aus der DE 103 48 164 A1 bekannt. Dieses Fahrzeug weist ein auf einem Dach des Fahrzeugs oder einem in dem Dach eingelassenen Schiebedach angeordnetes Solarpanel auf, das bei einer Sonnenbestrahlung elektrische Energie erzeugt. Diese elektrische Energie wird einer Klimatisierungseinrichtung zugeführt, die ein in einem Fahrgastraum des Fahrzeugs angeordnetes Kühlsystem umfasst. Dabei dient das Kühlsystem zur Klimatisierung des Fahrzeuginnenraums insbesondere bei einem abgestellten Fahrzeug. Zusätzlich weist die Klimatisierungseinrichtung einen CO₂-Sensor auf, der ebenfalls in dem Fahrgastraum angeordnet ist und eine Anwesenheit einer Person in dem Fahrgastraum erkennen soll.

Der Erfindung liegt die Aufgabe zugrunde, ein ein Solarpanel zur Erzeugung elektrischer Energie aufweisendes Fahrzeug und ein Verfahren zum Betreiben eines derartigen Fahrzeugs anzugeben, das hinsichtlich seiner Funktion verbessert ist.

### Offenbarung der Erfindung

Diese Aufgabe wird durch ein Fahrzeug mit den Merkmalen des Anspruchs 1 sowie durch ein Verfahren zum Betreiben eines Fahrzeugs mit den Merkmalen des Anspruchs 8 gelöst. Dieser Ausgestaltung und diesem Verfahren liegt die Erkenntnis zugrunde, dass bei einem Fahrzeug, das einen Gastank zur Bevorratung eines Gases, beispielsweise Methan, das zum Betrieb einer in dem Fahrzeug verbauten gasbetriebenen Brennkraftmaschine verwendet wird, das Gas bei einer Sonnenbestrahlung des Fahrzeugs und/oder insbesondere des Gastanks in den Gastank infolge der von der Sonnenbestrahlung verursachten Temperaturerhöhung verdampft. Dadurch wird eine Volumenvergrößerung des Gases hervorgerufen und in Abhängigkeit von dem in dem Gastank herrschenden Gasdruck muss ein Ausgleich für die Volumenvergrößerung erfolgen. Bei einem herkömmlichen System wird eine Gasmenge aus dem Gastank in die Umgebung abgelassen, um den in dem Gastank herrschenden Gasdruck auf einen zulässigen Wert zu reduzieren. Ein solches Ablassen des Gases erfolgt bei herkömmlichen Fahrzeugen über ein Überdruckventil, das das Gas in die Umgebung entweichen lässt. Ein solches Ablassen des Gases in die Umgebung ist aber nicht gewünscht, weil das Gas einen Treibhausgaseffekt bewirkt und somit umweltschädlich ist. Dadurch, dass erfindungsgemäß das Kühlsystem der Klimatisierungseinrichtung an dem Gastank angeordnet ist, wird das in dem Gastank befindliche Gas gekühlt und damit eine Verdampfung des in dem Gastank befindlichen flüssigen Gases vermieden oder zumindest deutlich verzögert. Demzufolge wird eine aus Sicherheitsaspekten vorhandene Sicherheitseinrichtung zum Ablassen des Gases aus dem Gastank bei einer Verdampfung des Gases nicht mehr eingesetzt werden müssen oder aber beim Auftreten von besonderen Randbedingungen ist gewährleistet, dass diese erheblich weniger als bei einem herkömmlichen gasbetriebenen Fahrzeug zum Einsatz kommt.

In weiterer Ausgestaltung der Erfindung ist das Kühlsystem ein in dem Gastank angeordneter Wärmetauscher, der mit weiteren Komponenten der Klimatisierungseinrichtung verschaltet ist. Weiterhin kann die Klimatisierungseinrichtung auch mit dem Kühlsystem beziehungsweise dem Wärmetauscher zu einer Baueinheit zusammengefasst sein, die an und/oder in dem Gastank angeordnet ist. Weiterhin kann die Klimatisierungseinrichtung neben dem in dem Gastank angeordneten Wärmetauscher auch noch zumindest einen weiteren Wärmetauscher aufweisen, der beispielsweise in einem Fahrgastraum des Fahrzeugs angeordnet ist. Dabei kann weiterhin eine Steuervorrichtung vorgesehen sein, die die durch die in dem Gastank und dem Fahrzeuginnenraum bewirkte Kühlung steuert. Diese Steuerung kann so eingerichtet sein, dass zunächst einmal eine Kühlung des Gases in dem Gastank auf eine bezüglich des Einsetzens eines Verdampfungsvorgangs nicht kritischen Temperaturwertes erfolgt. Falls dann noch weitere Kühlleistung zur Verfügung steht, kann darüber hinaus der Fahrgastraum gekühlt werden.

In weiterer Ausgestaltung der Erfindung ist das zumindest eine Solarpanel auf dem Dach des Fahrzeugs angeordnet. Dabei ist die Größe des Solarpanels so ausgelegt, dass eine ausreichende Kühlung des in dem Gastank bevorrateten Gases auch bei einer intensiven Sonnenbestrahlung des Fahrzeug beziehungsweise des Gastanks zur Vermeidung einer Verdampfung des Gases vermieden ist.

In Weiterbildung der Erfindung ist vorgesehen, dass eine die Klimatisierungseinrichtung steuernde Steuereinrichtung vorgesehen ist, die mit zumindest einem in dem Gastank angeordneten Drucksensor und/oder Temperatursensor verbunden ist. Diese Steuereinrichtung setzt die Klimatisierungseinrichtung beim Überschreiten von vorgegebenen Grenzwerten, die von dem Drucksensor und/oder dem Temperatursensor ermittelt werden, in Gang und steuert zudem die zuvor beschriebene Verteilung der Kühlleistung beim Vorhandensein von mehreren Wärmetauschern.

In Weiterbildung der Erfindung weist die Klimatisierungseinrichtung einen externen Spannungsanschluss vor, der an einem fahrzeugexternen Stromnetz anschließbar ist. Dadurch ist sichergestellt, dass auch bei der Gefahr einer Verdampfung von in dem Gastank bevorrateten Gas, aber einer unzureichenden Energieversorgung durch das Solarpanel eine Kühlung des Gases vorgenommen werden kann. Dies kann beispielsweise bei einem in einer Halle abgestellten Fahrzeug sein, in der hohe Temperaturen herrschen, aber durch das Solarpanel keine ausreichende elektrische Energie erzeugt werden kann. Dabei ist in weiterer Ausgestaltung der Erfindung das fahrzeugexterne Stromnetz ein öffentliches Haushaltsnetz. Ein solches Haushaltsnetz steht nahezu überall zur Verfügung und die Klimatisierungseinrichtung kann über ein externes Anschlusskabel mit dem Haushaltsnetz verbunden werden.

Weitere vorteilhafte Ausgestaltungen der Erfindung sind der Zeichnungsbeschreibung zu entnehmen, in der ein in der Figur dargestelltes Ausführungsbeispiel der Erfindung näher beschrieben ist.

Es zeigt:

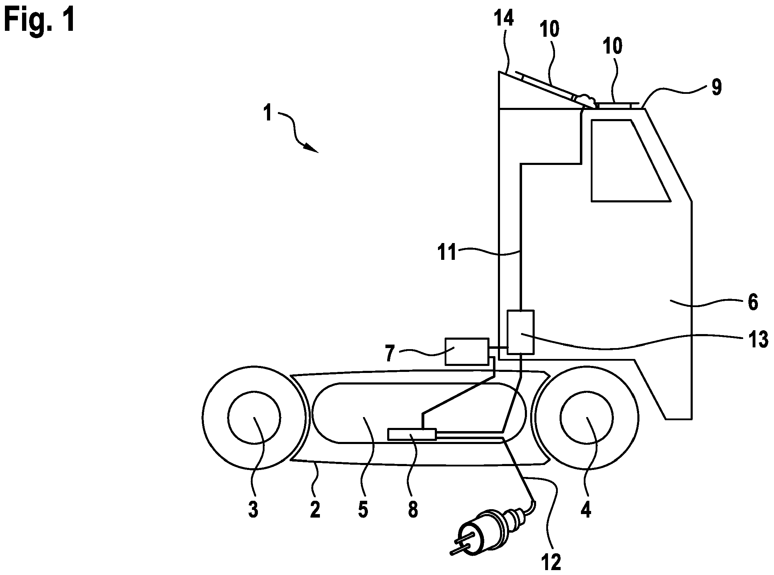

- Figur 1: eine schematische Seitenansicht eines erfindungsgemäß ausgestalteten Fahrzeugs mit einem Gastank, in dem ein Kühlsystem einer Klimatisierungseinrichtung angeordnet ist.

Die schematische Seitenansicht gemäß Figur 1 zeigt ein Fahrzeug, das beispielsweise als Zugfahrzeug im Nutzfahrzeugbereich ausgebildet ist. Das Fahrzeug 1 weist einen Rahmen 2 auf, an dem eine Hinterradachse 3 und eine Vorderradachse 4 angeordnet ist. Die Hinterradachse 3 wird von einer an dem Fahrzeug verbauten Brennkraftmaschine über ein Getriebe angetrieben. Die nicht dargestellte Brennkraftmaschine ist gasbetrieben, wobei das Gas in einen Gastank 5, der an dem Fahrzeug 1 beziehungsweise dem Rahmen 2 befestigt ist, bevorratet wird. Dabei kann das Gas (nach der Entnahme aus dem Gastank 5) der Brennkraftmaschine im flüssigen oder gasförmigen Zustand zugeführt werden. Dies hängt von dem Gas und/oder der Steuerung des entsprechenden Einspritzsystems ab. Oberhalb der Vorderradachse 4 ist an dem Rahmen 2 ein Führerhaus 6 angeordnet. Das Fahrzeug 1 weist eine beispielsweise an dem Rahmen 2 angeordnete und befestigte Klimatisierungseinrichtung 7 auf, die ein in dem Gastank 5 angeordnetes Kühlsystem in Form eines Wärmetauschers 8 aufweist. Die Klimatisierungseinrichtung 7 und der Wärmetauscher 8 können gegebenenfalls auch eine Baueinheit bildend in oder an dem Gastank 5 angeordnet sein. Die Klimatisierungseinrichtung 7 wird elektrisch betrieben. Zur Bereitstellung beziehungsweise Erzeugung von elektrischer Energie ist auf einem Dach 9 zumindest ein Solarpanel 10 angeordnet, das zumindest ungestört von weiteren Fahrzeugteilen einer Sonnenbestrahlung ausgesetzt ist. Das zumindest eine Solarpanel 10 kann in das Dach 9 integriert sein oder aber alternativ oder additiv auch auf einem an dem Dach 9 angeordneten Zusatzteil, wie beispielsweise einem Dachspoiler 14, angeordnet sein.

Insbesondere wenn das Fahrzeug 1 abgestellt ist, kann bei einer Sonnenbestrahlung des Fahrzeugs 1 beziehungsweise insbesondere des Gastanks 5 das in dem Gastank 5 im flüssigen Zustand bevorratete Gas durch die von der Sonnenbestrahlung bewirkte Temperatureinwirkung verdampfen und eine Druckerhöhung in dem Gastank 5 bewirken. Um für diesen Fall einen Druckausgleich zu ermöglichen, ist bei einem herkömmlichen Fahrzeug 1 ein mit dem Gastank 5 verbundenes Überdruckventil vorgesehen, über das das Gas bis zum Erreichen eines zugelassenen Normaldrucks in die Umgebung abströmen kann.

Erfindungsgemäß wird nun das in dem Gastank 5 bevorratete Gas von der Klimatisierungseinrichtung 7 beziehungsweise dem in dem Gastank 5 eingebauten Wärmetauscher 8 der Klimatisierungseinrichtung 7 gekühlt. Die Kühlleistung ist idealerweise so ausgelegt, dass die Verdampfung des Gases in dem Gastank 5 verhindert wird. Bei ungünstigen Umgebungsbedingungen ist die Kühlleistung aber ausreichend, den Verdampfungsvorgang zumindest deutlich heraus zu zögern. Dabei ist die Verzögerung in den meisten Fällen zeitlich so bemessen, dass die Sonnenbestrahlung durch den täglichen Gang der Sonne nicht mehr auf den Gastank 5 einwirkt oder das Fahrzeug 1 bewegt wird.

Die elektrische Energie zum Betrieb der Klimatisierungseinrichtung 7 wird durch das zumindest eine Solarpanel 10 erzeugt, das mit der Klimatisierungseinrichtung 7 über eine Leitung 11 verbunden ist. Zusätzlich weist die Klimatisierungseinrichtung 7 ein Anschlusskabel 12 auf, das an ein fahrzeugexternes Stromnetz, insbesondere ein Haushaltsnetz anschließbar ist. Dadurch ist sichergestellt, dass bei einem Kühlungsbedarf des in dem Gastank 5 bevorrateten Gases, aber nicht zur Verfügung stehender ausreichender Solarenergie dennoch eine Kühlung des Gases erfolgen kann. Dies kann der Fall sein, wenn das Fahrzeug 1 in einer Sonnenbestrahlung ausgesetzten Halle abgestellt ist, die die Temperatur in der Halle ohne direkte Einwirkung auf das Fahrzeug 1 auf kritische Werte erhöht. Weiterhin kann die Klimatisierungseinrichtung 7 auch zur Entnahme von elektrischer Energie aus dem Bordnetz des Fahrzeugs 1 ausgestattet sein. Diese Entnahme kann zeitlich limitiert sein, um die Betriebsbereitschaft des Fahrzeugs 1 nicht infrage zu stellen. Schließlich ist ein Steuergerät 13 vorgesehen, das beispielsweise in dem Führerhaus 6 angeordnet sein kann und das beispielsweise mit einem in dem Gastank 5 angeordneten Drucksensor und/oder einem Temperatursensor zur Steuerung der Klimatisierungseinrichtung 7 verbunden ist. Um unter allen Umständen zu verhindern, dass sich in dem Gastank 5 auch unter ungünstigsten Randbedingungen ein unzulässig hoher Gasdruck einstellt, kann auch bei der beschriebenen erfindungsgemäßen Ausgestaltung ein Überdruckventil vorgesehen sein, das Gas in die Umgebung oder eine Abfackelvorrichtung ableitet, in der das Gas kontrolliert abgefackelt wird und somit nicht zu einer Belastung der Umwelt beiträgt.

## Patentansprüche

1. Fahrzeug (1), aufweisend eine gasbetriebene Brennkraftmaschine, einen Gastank (5) und zumindest ein Solarpanel (10) zur Erzeugung von elektrischer Energie bei einer Sonnenbestrahlung des Solarpanels (10), wobei das Solarpanel (10) mit einer elektrisch betriebenen Klimatisierungseinrichtung (7), die ein an dem Fahrzeug (1) verbautes Kühlsystem aufweist, verbunden ist,
**dadurch gekennzeichnet, dass** das Kühlsystem an dem Gastank (5) des Fahrzeugs (1) angeordnet ist.

2. Fahrzeug (1) nach Anspruch 1,
**dadurch gekennzeichnet, dass** die Klimatisierungseinrichtung (7) zur Kühlung des in dem Gastank (5) bevorrateten Gases ausgelegt ist.

3. Fahrzeug (1) nach einem der vorherigen Ansprüche,
**dadurch gekennzeichnet, dass** das Kühlsystem ein in dem Gastank (5) angeordneter Wärmetauscher (8) ist.

4. Fahrzeug (1) nach einem der vorherigen Ansprüche,
**dadurch gekennzeichnet, dass** das Solarpanel (10) auf einem Dach (9) des Fahrzeugs (1) angeordnet ist.

5. Fahrzeug (1) nach einem der vorherigen Ansprüche,
**dadurch gekennzeichnet, dass** eine die Klimatisierungseinrichtung (7) steuernde Steuereinrichtung mit einem Steuergerät (13) vorgesehen ist, das zumindest einem in dem Gastank (5) angeordneten Drucksensor und/oder Temperatursensor verbunden ist.

6. Fahrzeug (1) nach einem der vorherigen Ansprüche,
**dadurch gekennzeichnet, dass** die Klimatisierungseinrichtung (7) an ein fahrzeugexternes Stromnetz anschließbar ist.

7. Fahrzeug (1) nach Anspruch 6,
**dadurch gekennzeichnet, dass** das fahrzeugexterne Stromnetz ein öffentliches Haushaltsnetz ist.

8. Verfahren zum Betreiben eines Fahrzeugs (1), aufweisend einen Gastank (5) und zumindest ein Solarpanel (10) zur Erzeugung von elektrischer Energie bei einer Sonnenbestrahlung des Solarpanels (10), wobei das Solarpanel (10) mit einer elektrisch betreibbaren Klimatisierungseinrichtung (7) mit einem Kühlsystem verbunden ist,
**dadurch gekennzeichnet, dass** die Klimatisierungseinrichtung (7) zur Kühlung des in dem Gastank (5) bevorrateten Gases in der Form eingesetzt ist, dass ein Verdampfen des flüssigen Gases verhindert oder zumindest verzögert wird.

## Claims

1. Vehicle (1), comprising a gas-operated internal combustion engine, a gas tank (5) and at least one solar panel (10) for generating electrical energy when the solar panel (10) is acted upon by solar radiation, wherein the solar panel (10) is connected to an electrically operated air-conditioning device (7), which has a cooling system installed on the vehicle (1),
**characterized in that** the cooling system is arranged on the gas tank (5) of the vehicle (1).

2. Vehicle (1) according to Claim 1,
**characterized in that** the air-conditioning device (7) is designed for cooling the gas stored in the gas tank (5).

3. Vehicle (1) according to one of the preceding claims,
**characterized in that** the cooling system is a heat exchanger (8) arranged in the gas tank (5).

4. Vehicle (1) according to one of the preceding claims,
**characterized in that** the solar panel (10) is arranged on a roof (9) of the vehicle (1).

5. Vehicle (1) according to one of the preceding claims,
**characterized in that** a control device controlling the air-conditioning device (7) is provided with a control unit (13), which is connected to at least one pressure sensor and/or temperature sensor arranged in the gas tank (5).

6. Vehicle (1) according to one of the preceding claims,
**characterized in that** the air-conditioning device (7) can be connected to a power supply system outside the vehicle.

7. Vehicle (1) according to Claim 6,
**characterized in that** the power supply system outside the vehicle is a public domestic supply system.

8. Method for operating a vehicle (1), comprising a gas tank (5) and at least one solar panel (10) for generating electrical energy when the solar panel (10) is acted upon by solar radiation, wherein the solar panel (10) is connected to an electrically operated air-conditioning device (7) with a cooling system,
**characterized in that** the air-conditioning device (7) is used for cooling the gas stored in the gas tank (5) in the form that evaporation of the liquid gas is prevented or at least delayed.

## Revendications

1. Véhicule (1), présentant un moteur à combustion interne fonctionnant au gaz, un réservoir de gaz (5) et au moins un panneau solaire (10) pour la production d'énergie électrique lors d'une exposition du panneau solaire (10) au rayonnement solaire,
dans lequel le panneau solaire (10) est relié à un dispositif de climatisation (7) fonctionnant à l'électricité, qui présente un système de refroidissement installé sur le véhicule (1),
**caractérisé en ce que** le système de refroidissement est disposé sur le réservoir de gaz (5) du véhicule (1).

2. Véhicule (1) selon la revendication 1, **caractérisé en ce que** le dispositif de climatisation (7) est conçu pour le refroidissement du gaz stocké dans le réservoir de gaz (5).

3. Véhicule (1) selon l'une quelconque des revendications précédentes, **caractérisé en ce que** le système de refroidissement est un échangeur de chaleur (8) disposé dans le réservoir de gaz (5).

4. Véhicule (1) selon l'une quelconque des revendications précédentes, **caractérisé en ce que** le panneau solaire (10) est disposé sur un toit (9) du véhicule (1).

5. Véhicule (1) selon l'une quelconque des revendications précédentes, **caractérisé en ce qu'**il est prévu un dispositif de commande commandant le dispositif de climatisation (7), avec un appareil de commande (13) qui est relié à au moins un capteur de pression et/ou un capteur de température disposé dans le réservoir de gaz (5) .

6. Véhicule (1) selon l'une quelconque des revendications précédentes, **caractérisé en ce que** le dispositif de climatisation (7) peut être raccordé à un réseau électrique extérieur au véhicule.

7. Véhicule (1) selon la revendication 6, **caractérisé en ce que** le réseau électrique extérieur au véhicule est un réseau de distribution public.

8. Procédé pour faire fonctionner un véhicule (1), présentant un réservoir de gaz (5) et au moins un panneau solaire (10) pour la production d'énergie électrique lors d'une exposition du panneau solaire (10) au rayonnement solaire, dans lequel le panneau solaire (10) est relié à un dispositif de climatisation (7) pouvant fonctionner à l'électricité avec un système de refroidissement, **caractérisé en ce que** le dispositif de climatisation (7) est utilisé pour le refroidissement du gaz stocké dans le réservoir de gaz (5), sous une forme telle qu'une évaporation du gaz liquide soit empêchée ou au moins retardée.
